**Europäisches Patentamt**

**European Patent Office**

**Office européen des brevets**

(19)

(11) Numéro de publication: **0 014 362**
**B1**

(12) **FASCICULE DE BREVET EUROPEEN**

(45) Date de publication du fascicule de brevet: **30.12.81**

(51) Int. Cl.³: **A 23 J 3/00**

(21) Numéro de dépôt: **80100258.5**

(22) Date de dépôt: **21.01.80**

(54) Procédé de désamérisation d'un hydrolysat de protéines de petit-lait et hydrolysat désamérisé obtenu.

(30) Priorité: **26.01.79 CH 788/79**

(43) Date de publication de la demande:
**20.08.80 Bulletin 80/17**

(45) Mention de la délivrance du brevet:
**30.12.81 Bulletin 81/52**

(84) Etats Contractants Désignés:
**BE DE FR GB IT NL SE**

(56) Documents cités:
**BE - A - 867 514**
**FR - A - 1 024 870**
**GB - A - 659 612**
**US - A - 4 075 195**

**CHEMICAL ABSTRACTS, vol. 82, no. 19, 12 mai 1975, abrégé 123626j Columbus, Ohio, USA**

**CHEMICAL ABSTRACTS, vol. 89, no. 25, décembre 1978, page 459, abrégé 213694d. Columbus, Ohio, USA**
**J. F. ROLAND et al. "Hydrophobic chromatography; debittering protein hydrolysates"**

(73) Titulaire: **SOCIETE DES PRODUITS NESTLE S.A.**
**Case postale 353**
**CH-1800 Vevey (CH)**

(72) Inventeur: **Farr, David Robert**
**Les Fleurettes**
**CH-1807 Brent (CH)**
Inventeur: **Magnolato, Danièle**
**Bellevue B.**
**CH-1803 Chardonne (CH)**

Courier Press, Leamington Spa, England.

# 0 014 362

Procédé de désamérisation d'un hydrolysat de protéines de petit-lait et hydrolysat désamérisé obtenu

La présente invention concerne le traitement des hydrolysats de protéines en vue d'en diminuer la teneur en substances amères.

Les hydrolysats de protéines sont, en général, des mélanges d'acides aminés et de petits peptides susceptibles de fournir à l'organisme, sous une forme directement assimilable, les éléments constitutifs des protéines. Ils constituent de ce fait des produits d'une haute valeur nutritive mais ont l'inconvénient d'avoir souvent une odeur désagréable et une saveur amère qui limitent le champ de leur application.

On connaît diverses techniques de désamérisation, mais, soit que celles-ci soient peu sélectives (traitement par des solvants), soit qu'elles soient onéreuses (adsorption sur résines ou gels), leur emploi semble plutôt académique ou, à tout le moins, limité à des produits à forte valeur ajoutée.

La présente invention ne présente pas ces inconvénients. Elle concerne un procédé de désamérisation d'un hydrolysat de protéines par adsorption sélective à l'aide d'un matériau naturel et bon marché. Ce procédé est caractérisé par le fait qu'on met en contact l'hydrolysat avec un adsorbant solide ligneux d'origine végétale sous forme divisée, ci-après désigné par "adsorbant," et qu'on recueille l'hydrolysat désamérisé après l'avoir séparé de l'adsorbant.

Comme exemples d'hydrolysats de protéines avantageusement traités selon l'invention on peut citer les hydrolysats enzymatiques de lactalbumine. Ces produits sont préparés à partir de lactalbumine, obtenue par exemple par ultrafiltration du petit-lait, puis hydrolysée par des enzymes ou des mélanges d'enzymes telles que la pancréatine ou des protéases purifiées telles que la trypsine.

Les hydrolysats obtenus contiennent des acides aminés libres ainsi que des peptides à chaine courte et moyenne.

Comme indiqué ci-dessus, l'hydrolysat obtenu a l'inconvénient de présenter une certaine amertume qui est vraisemblement due aux acides aminés à caractère aromatique comme la phénylalanine, la tyrosine, le tryptophane, et aux peptides contenant des résidus de ces aminoacides. Le procédé selon l'invention permet par adsorption de ces principes amers de diminuer fortement l'amertume de ces produits, ce qui élargit le champ de leur application.

L'absorbant solide ligneux d'origine végétale utilisable dans le présent procédé est constitué par les résidus fibreux provenant des gousses de caroube dont on a extrait les sucres à l'eau chaude. Le caroubier ou locuste, Ceratonia siliqua (famille des légumineuses) est un arbre pouvant aller jusqu'à 20 m de haut, originaire de Syrie et actuellement cultivé dans les pays méditerranéens. Son fruit contient des graines dont l'endosperme constitue la source de la gomme de caroube, Le péricarpe ou gousse est soit jeté, sout utilisé pour produire un sirop de basse qualité (sirop de caroube), ou encore dans l'alimentation animale. Les résidus sont habituellement jetés.

Ainsi la matière première utilisée pour préparer l'adsorbant est constituée soit des gousses, soit des résidus provenant de l'extraction des sucres. Il est donc avantageux de traiter ce matériau pour le débarrasser des impuretés, des sucres et des arômes de caroube par toute méthode convenable. On procède habituellement à une mouture grossière du matériau. Dans le cas où on traite les gousses non désucrées, une méthode commode consiste à les refroidir par exemple à −40°C et à les moudre. Les particules de gousses de caroube ou de résidus partiellement désucrées subissent un traitement à l'eau chaude pour éliminer les sucres. On peut utiliser, par exemple, une batterie de cellules d'extraction en ligne et extraire les sucres à l'eau chaude, par exemple à 95°C. Les particules de caroube sont ensuite avantageusement séchées par exemple sous un léger vide, ce qui permet leur désodorisation.

En variante avantageuse, on peut traiter ces particules par un acide, puis éventuellement les soumettre à un traitement de désodorisation, par exemple par entraînement à la vapeur. Dans le premier cas, on peut employer tout acide convenable, comme par exemple l'acide chlorhydrique, sulfurique ou phosphorique à l'état dilué ou concentré. Un traitement à l'acide chlorhydrique dilué pendant 1 à 3 heures à température ambiante convient.

Pour des raisons pratiques, on préfère utiliser un matériau de granulométrie relativement régulière. Le matériau subit donc un tamisage, les particules retenues étant avantageusement de dimension 0.3 à 5 mm et de préférence de 0,5 à 4 mm.

La mise en contact de l'hydrolysat de protéines et de l'adsorbant peut être réalisée de diverses manières. On peut par exemple percoler l'hydrolysat à travers une colonne d'adsorbant et, dans ce cas, on récupère directement au bas de la colonne l'hydrolysat désamérisé. On peut également mettre l'adsorbant en suspension dans l'hydrolysat et il faut prévoir alors des moyens de séparation, ce qui peut être effectué très simplement par siphonage après décantation ou par filtration.

Le temps de contact entre l'adsorbant et l'hydrolysat de protéines, ainsi que divers autres paramètres, tels que la température à laquelle ce contact est réalisé et les proportions d'adsorbant par rapport à l'hydrolysat, dépendent à la fois du taux de désamérisation désiré, de même que des modalités pratiques de mise en oeuvre. D'une façon générale, des temps de contact de l'ordre de 5 à 60 minutes pour des températures comprises entre 10 et 60°C sont satisfaisants. On travaille avantageusement avec des proportions hydrolysat/adsorbant comprises entre 10 et 400 ml/g. L'adsorption peut être suivie d'un rinçage à l'eau, à la même température ou à une température supérieure pourvu que celle-ci ne dépasse pas 60°C.

2

**0014362**

De son côté, l'hydrolysat de protéines peut contenir, après clarification, de 1 à 25% et de préférence de 5 à 10% en poids de matières solubles. Cet hydrolysat peut avoir été préalablement désodorisé par entraînement à la vapeur.

Selon une première forme d'exécution du procédé selon l'invention, on met en suspension, dans un hydrolysat de protéines préablement clarifié et éventuellement standardisé par dilution avec de l'eau et ayant une teneur en matières sèches de l'ordre de 3 à 15%, des gousses de caroube désucrées, en particules, qui ont avantageusement subi un lavage à l'acide. Après un laps de temps compris entre 10 et 60 minutes pendant lequel la suspension est maintenue constamment sous agitation, on sépare les solides du liquide par filtration et on récupère ainsi l'hydrolysat désamérisé. En variante, on remet les gousses de caroube en suspension dans de l'eau à des fins de rinçage et, après séparation, on joint les eaux de rinçage à l'extrait désamérisé. Dans ces conditions, l'absorption peut être par exemple réalisée à température ambiante tandis que le rinçage est effectué vers 50°C. On a constaté que le lavage en particulier à chaud désorbe certains acides aminés et peptides amers. Il est certain qu'on préfère ne pas les réintroduire dans l'hydrolysat car il faudrait alors masquer leur amertume par exemple par adjonction d'arôme. On cherchera donc un compromis assurant une perte minimum en matières sèches pour une amertume acceptable. Le mélange obtenu est alors traité selon les technologies conventionnelles en matière d'hydrolysats de protéines. Si désiré, on peut réintroduire dans l'hydrolysat les éventuelles matières solides dont il a été débarrassé avant contact avec l'adsorbant, afin d'obtenir un hydrolysat final présentant un louche.

Selon une deuxième forme d'exécution préférée, on utilise des lits de particules de gousses de caroube désucrées disposées dans des colonnes, et on percole l'hydrolysat de protéines à travers ces colonnes. On récupère ainsi directement l'hydrolysat désamérisé. Les particules utilisées doivent être assez grossières, sous peine de colmatage rapide des colonnes. On peut procéder à un rinçage comme ci-dessus.

La qualité des hydrolysats obtenus ne se ressent pas du traitement selon l'invention. En ravanche, aux yeux des dégustateurs qui préfèrent des hydrolysats peu amers, le traitement s'avère nettement bénéfique.

En particulier les hydrolysats de lactalbumine traités selon l'invention peuvent être incorporés dans de nombreuses préparations alimentaires à usage diététique comme par exemple des laits diététiques ou des aliments facilement résorbables à l'usage des personnes souffrant de troubles de la digestion.

Bien entendu, ces hydrolysats peuvent être séchés, par atomisation ou lyophilisation.

Les exemples suivants illustrent la mise en oeuvre du procédé selon l'invention. Dans ceux-ci, les parties et pourcentages sont pondéraux sauf indication contraire.

Exemple 1

*Préparation de l'adsorbant*

On moud 10 kg de résidus de gousses de caroube provenant de l'extraction des sucres jusqu'à une dimension des particules inférieure à 2 mm. Cette charge est placée dans une cuve contenant 50 kg d'eau désionisée à 60°C et on brasse 30 minutes à la même température.

On sépare les solides, on brasse pendant 30 minutes à 60°C avec 50 kg d'eau désionisée et on sépare. On ajoute alors 25 l d'acide chlorhydrique 2N et on brasse pendant 2 à 3 heures à 20°C. On sépare les solides qu'on lave à l'eau désionisée jusqu'à ce que les eaux de lavage soient incolores. On sépare à nouveau les solides qu'on désodorise par strippage à la vapeur sous léger vide (50 mm Hg, 100°C) pendant 2 à 3 heures. Après séparation, les particules de caroube sont séchées et tamisées sur une grille de 0,3 mm. On recueille ainsi des particules de granulométrie 0,3—2 mm. Dans le traitement précédent, on peut utiliser l'acide sulfurique ou phosphorique (2N) à la place de l'acide chlorhydrique avec des résultats analogues.

*Préparation de l'hydrolysat A.*

On prépare un hydrolysat de protéines avec la pancréatine de la façon suivante:

On traite une protéine de petit-lait en suspension à raison d'environ 10% dans l'eau dont on a ajusté le pH à environ 7,2, par adjonction d'hydroxyde de potassium, par une pancréatine du commerce à raison de 3% sur matière protéique (contenant sous forme active de la trypsine, de la chymotrypsine, des peptidases, amylases et lipases) pendant 5 heures à 55°C.

A la fin de l'hydrolyse on fait subir à l'hydrolysat un traitement thermique à 105°C pendant 30 à 50 secondes, ensuite de quoi on centrifuge, filtre, pasteurise à 105°C puis on évapore et on sèche par atomisation. Le produit a la composition suivante:

|  |  |
|---|---|
| teneur en azote | 11,8 |
| humidité | 3,6 |
| cendres | 4 |

3

| | |
|---|---|
| lactose | 8,7 |
| pH (solution à 5%) | 6,2 |

et contient environ 27% d'acides aminés libres.

*Traitement de l'hydrolysat*

On passe 100 ml d'une solution à 5% de l'hydrolysat A sur une colonne contenant 10 g de l'adsorbant.

L'éluat contient 49% de la matière sèche de départ; son goût amer est fortement réduit. Le profil chromatographique de cet éluat indique que les peptides de poids moléculaires inférieurs à 1,000 et contenant des acides aminés aromatiques (phénylalanine, tyrosine, tryptophane) sont fortement retenus. On note également und adsorption des peptides de poids moléculaires élevés.

Un lavage avec 100 ml d'eau à température ambiante permet l'élution des peptides et acides aminés contenant de la tyrosine et du tryptophane. On récupère 23% de la matière sèche de départ.

On effectue ensuite un lavage avec 100 ml d'eau à 50°C, suivi d'un lavage avec 100 ml d'eau à 90°C. Ces lavages à chaud permettent de récupérer les 15% de la matière sèche de départ, contenant essentiellement de la phénylalanine (peptides).

Les 13% de matière sèche restant sur la colonne sont essentiellement constitués de peptides de poids moléculaires élevés. On régénère l'adsorbant par lavage prolongé dans de l'eau à ébullition, après avoir, si nécessaire, désorbé les composés fortement fixés, à l'aide d'un détergent (ou selon toute méthode usuelle).

Les résultants sont consignés dans le tableau I ci-dessous:

Tableau I

| Echantillon | Poids d'hydro-lysat (g) | Poids d'adsor-bant (g) | Volume d'hydro-lysat (ml) | % récu-pérés | Dégustation |
|---|---|---|---|---|---|
| hydrolysat A | 5,00 | 10,0 | 100 | | I 100% |
| éluat | 2,45 | — | 100 | 49 | I 33% II 33% III 33% |
| lavage 25°C | 1,15 | — | 100 | 23 | I 50% II 33% III 17% |
| lavage 50°C | 0,45 | — | 100 | 9 | I 17% II 50% III 33% |
| lavage 90°C | 0,30 | — | 100 | 6 | I 0% II 50% III 0% |

Remarques

I : échantillon trouvé amer par les dégustateurs
II : échantillon trouvé moyennement amer par les dégustateurs
III: échantillon trouvé pas amer par les dégustateurs

Exemple 2

L'adsorbant est préparé comme à l'exemple 1 et le traitement sur colonne s'effectue comme indiqué à l'exemple 1.

*Préparation de l'hydrolysat B*

On procède comme pour la préparation de l'hydrolysat A sauf qu'on effectue l'incubation avec la pancréatine pendant 2 heures et qu'on ajoute ensuite un mélange de trypsines purifiées du commerce après quoi on effectue l'incubation pendant 3 heures.

Le produit après atomisation a la composition suivante:

| | |
|---|---|
| teneur en azote | 11,8 |
| humidité | 3,4 |
| cendres | 5,3 |
| lactose | 7,4 |
| pH (solution à 5%) | 6,6 |

et il contient 18—20% d'acides aminés libres.

4

# 0 014 362

Les résultants sont consignés dans le tableau II ci-dessous:

Tableau II

| Echantillon | Poids d'hydrolysat (g) | Poids d'absorbant (g) | Volume d'hydrolysat (ml) | % récupérés |
|---|---|---|---|---|
| hydrolysat B | 5,00 | 10,0 | 100 | — |
| éluat | 2,25 | — | 100 | 45 |
| lavage 25°C | 0,95 | — | 100 | 19 |
| lavage 50°C | 0,60 | — | 100 | 12 |
| lavage 90°C | 0,35 | — | 100 | 7 |

## Exemples 3—4

On place 5 ml d'une solution à 5% d'hydrolysat A préparé selon l'exemple 1 au contact de 100, 200 ou 500 mg d'adsorbant, sous agitation et à température ambiante. On suit l'adsorption des composés aromatiques au cours du temps, pendant la première heure de réaction et on détermine la quantité de solides dissous adsorbés après une heure de réaction.

On lave ensuite l'adsorbant avec 5 ml d'eau à température ambiante pendant 15 minutes et on détermine la quantité de solides récupérés par lavage ainsi que la proportion d'aromatiques récupérés.

On traite 5 ml d'une solution à 5% d'hydrolysat B préparé selon l'exemple 2 de la même manière.

Les résultats obtenus sont consignés dans le tableau III ci-dessous:

Tableau III

| Echantillon | Poids d'hydro- lysat (mg) | Poids d'adsor- bant (mg) | Volume d'hydro- lysat (ml) | % récupérés Solution d'hydrolysat | Eaux de lavage |
|---|---|---|---|---|---|
| hydrolysat A de départ | 212,5 | — | 5,0 | — | — |
|  |  | 100 | 5,0 | 97 | 2 |
| hydrolysat A traité |  | 200 | 5,0 | 90 | 5 |
| '' |  | 500 | 5,0 | 80 | 9 |
| hydrolysat B de départ | 213,7 | — | 5,0 | — | — |
| hydrolysat B traité |  | 100 | 5,0 | 95 | 3 |
| '' |  | 200 | 5,0 | 88 | 3 |
| '' |  | 500 | 5,0 | 71 | 7 |

## Revendications

1, Procédé de désamérisation d'un hydrolysat enzymatique de protéines de petit-lait caractérisé par le fait qu'on met en contact l'hydrolysat avec un adsorbant ligneux d'origine végétale sous forme divisée constitué de particules de gousses de caroube désucrées, à une température comprise entre 10 et 60°C et que l'on recueille l'hydrolysat désamérisé après l'avoir séparé de l'adsorbant.

2. Procédé selon la revendication 1, caractérisé par le fait que l'adsorbant est pré-traité par lavage à l'acide suivi eventuellement d'un entraînement à la vapeur.

5

3. Procédé selon la revendication 1, caractérisé par le fait que les particules d'adsorbant sont tamisées de façon que leur granulométrie soit de 0,3 à 5 mm.

4. Procédé selon la revendication 1, caractérisé par le fait qu'on met en contact l'hydrolysat avec l'adsorbant pendant 5 à 60 minutes.

5. Procédé selon la revendication 1, caractérisé par le fait qu'on met en contact l'hydrolysat et l'adsorbant dans des proportions hydrolysat/adsorbant comprises entre 10 et 400 ml d'hydrolysat par gramme d'adsorbant.

6. Procédé selon la revendication 1, caractérisé par le fait que l'adsorbant est mis en suspension dans l'hydrolysat de protéines.

7. Procédé selon la revendication 1, caractérisé par le fait que l'hydrolysat de protéines est percolé à travers une colonne garnie d'adsorbant.

8. Hydrolysat de protéines désamérisé obtenu par la mise en oeuvre de procédé selon la revendication 1.

## Patentansprüche

1. Verfahren zur Entbitterung eines enzymatischen Hydrolysats von Molkeproteinen, dadurch gekennzeichnet, daß man das Hydrolysat mit einem teilchenförmigen holzhaltigen Adsorptionsmittel pflanzlichen Ursprungs, welches aus entzuckerten Johannisbrothülsen besteht, bei einer Temperatur zwischen 10 und 60°C in Berührung bringt und daß man das entbitterte Hydrolysat nach der Abtrennung vom Adsorptionsmittel gewinnt.

2. Verfahren nach Anspruch 1, dadurch gekennzeichnet, daß das Adsorptionsmittel durch Waschen mit Säure und gegebenenfalls durch anschließende Wasserdampfdestillation vorbehandelt wird.

3. Verfahren nach Anspruch 1, dadurch gekennzeichnet, daß die Adsorptionsmittelteilchen so ausgesiebt werden, daß ihre Korngröße zwischen 0,3 und 5 mm liegt.

4. Verfahren nach Anspruch 1, dadurch gekennzeichnet, daß man das Hydrolysat mit dem Adsorptionsmittel während 5 bis 60 Minuten in Berührung hält.

5. Verfahren nach Anspruch 1, dadurch gekennzeichnet, daß man das Hydrolysat und das Adsorptionsmittel in einem Hydrolysat/Adsorptionsmittel-Verhältnis zwischen 10 und 400 ml Hydrolysat je Gramm Adsorptionsmittel in Berührung bringt.

6. Verfahren nach Anspruch 1, dadurch gekennzeichnet daß das Adsorptionsmittel in Proteinhydrolysat suspendiert wird.

7. Verfahren nach Anspruch 1, dadurch gekennzeichnet, daß das Proteinhydrolysat durch eine mit dem Adsorptionsmittel gefüllte Kolonne laufengelassen wird.

8. Entbittertes Proteinhydrolysat, welches bei der Durchführung des Verfahrens nach Anspruch 1 erhalten worden ist.

## Claims

1. A process for debittering an enzymatic hydrolysate of whey protein characterised in that the hydrolysate is brought into contact with a ligneous adsorbent of vegetable origin in divided form consisting of particles of desugared carob husks at a temperature of from 10 to 60°C and in that the debittered hydrolysate is collected after separation from the adsorbent.

2. A process as claimed in claim 1, characterised in that the adsorbent is pretreated by washing with acid and optionally by subsequently stripping with steam.

3. A process as claimed in claim 1, characterised in that the particles of adsorbent are sieved in such a way that they have diameters of from 0.3 to 5 mm.

4. A process as claimed in claim 1, characterised in that the hydrolysate is contacted with the adsorbent for 5 to 60 minutes.

5. A process as claimed in claim 1, characterised in that the hydrolysate and the adsorbent are contacted in hydrolysate/adsorbent proportions of from 10 to 400 ml of hydrolysate per gram of adsorbent.

6. A process as claimed in claim 1, characterised in that the adsorbent is suspended in the protein hydrolysate.

7. A process as claimed in claim 1, characterised in that the protein hydrolysate is percolated through a column filled with adsorbent.

8. A debittered protein hydrolysate obtained by the process claimed in claim 1.